# FASCICULE DE BREVET EUROPEEN

(11) **EP 2 709 880 B1**
(45) Date de publication et mention de la délivrance du brevet: **08.05.2019**
(21) Numéro de dépôt: 12711648.1
(22) Date de dépôt: 02.04.2012
(51) Int. Cl.: B60S 1/52

(54) **DISPOSITIF DE PROJECTION DE LIQUIDE POUR BALAI D'ESSUYAGE**
FLÜSSIGSPRÜHVORRICHTUNG FÜR EIN WISCHBLATT
A LIQUID-SPRAYING DEVICE FOR A WIPER BLADE

(30) Priorité: 06.04.2011 FR 1153003
(43) Date de publication de la demande: 26.03.2014
(73) Titulaire: Valeo Systèmes d'Essuyage, 78322 Le Mesnil Saint Denis (FR)
(72) Inventeur: BOUSSET, Xavier, F-63115 Mezel (FR); KOLANOWSKI, Grégory, F-43300 Siaugues-Saint-Romain (FR)
(74) Mandataire: Callu-Danseux, Violaine
(86) Numéro de dépôt international: PCT/EP2012/055952
(87) Numéro de publication internationale: WO 2012/136621

(56) Documents cités:
- EP-A1- 1 918 167
- WO-A1-2008/006982
- WO-A1-2009/118286
- DE-A1-102006 013 900
- DE-A1-102009 017 990
- FR-A1- 2 920 729

## Description

Le domaine de la présente invention est celui des équipements pour les véhicules, et plus particulièrement celui des équipements pour l'essuyage des vitres des automobiles.

Les automobiles sont couramment équipées de systèmes d'essuie-glace pour assurer un lavage du pare-brise et éviter que la vision qu'a le conducteur de son environnement ne soit perturbée. Ces essuie-glaces sont classiquement entraînés par un bras effectuant un mouvement de va-et-vient angulaire et comportent des balais allongés, porteurs eux-mêmes de lames racleuses réalisées en une matière élastique. Ces lames frottent contre le pare-brise et évacuent l'eau en l'amenant en dehors du champ de vision du conducteur. Les balais sont réalisés sous la forme, soit, dans une version classique, de palonniers articulés qui tiennent la lame racleuse en plusieurs endroits discrets, soit, dans une version plus récente dénommée "flat blade" (pour "balai plat"), d'un ensemble semi-rigide qui maintient la lame racleuse sur toute sa longueur. Dans cette seconde solution, le balai est rattaché au bras tournant de l'essuie-glace par un ensemble constitué d'un connecteur mécanique et d'un adaptateur. Le connecteur mécanique est une pièce qui est sertie directement sur le balai plat, alors que l'adaptateur est une pièce intermédiaire qui permet la fixation du connecteur sur le bras de l'essuie-glace. Ces deux pièces sont reliées l'une à l'autre par un axe transversal qui autorise leur rotation relative, dans un plan perpendiculaire au pare-brise passant par le bras.

Les essuie-glaces sont également équipés de dispositifs d'amenée d'un liquide lave-vitre qui est acheminé depuis un réservoir installé sur le véhicule et qui est pulvérisé en direction du pare-brise par des buses situées soit autour du pare-brise, soit sur l'essuie-glace lui-même comme c'est le cas du dispositif divulgué dans le document WO2008/148614A1 ou dans le document DE102006013900.

Le dispositif de projection divulgué dans le document WO2008/148614 A1 est porté par un embout, qui est lui-même fixé sur une monture d'un balai. Cependant, la manière de disposer le dispositif de projection n'est pas détaillée, aucune solution industrialisable et répondant aux exigences économiques du milieu automobile n'étant montrée dans ce document.

Le but de la présente invention est donc de résoudre l'inconvénient décrit ci-dessus principalement en proposant une solution technique pour pulvériser un liquide sur une vitre d'un véhicule automobile qui soit réalisable d'un point de vue industriel. Autrement dit, la solution couverte par l'invention est, d'une part fiable et d'autre part, aboutie d'un point de vue économique, ce qui l'a rend adaptée à une exploitation dans le milieu automobile. De même, la conformation du dispositif de projection selon l'invention rend son montage sur un balai d'essuyage compatible avec les exigences des constructeurs automobiles. Enfin, un tel dispositif de pulvérisation peut aisément être installé en seconde monte puisqu'il ne demande qu'une faible adaptation de la longueur d'un composant du balai d'essuyage.

L'invention a donc pour objet un dispositif de projection d'un liquide destiné à être monté à une extrémité longitudinale d'un balai d'essuyage constitué d'au moins une vertèbre et d'une lame d'essuyage, comprenant un corps et un canal de circulation du liquide réalisés de manière unitaire, ledit canal comprenant un orifice d'admission et un orifice de projection, et dans lequel le corps comprend un logement destiné à recevoir la vertèbre.

De manière avantageuse, le logement traverse de part en part le corps constitutif du dispositif de projection. Autrement dit, le logement comprend deux ouvertures qui s'étendent respectivement dans une première face et dans une deuxième face bordant le corps.

Selon un exemple de réalisation, le dispositif de projection comprend un évidement destiné à recevoir un talon constitutif de la lame d'essuyage. Cet évidement forme un moyen de retenu mécanique de la lame d'essuyage par rapport au dispositif de projection.

Ce dispositif de projection comprend par ailleurs un volume interne délimité par le corps et par une paroi périphérique, ledit volume interne étant apte à recevoir un support constitutif du balai d'essuyage. On comprend ici que ce volume interne est ouvert vers l'extérieur et présente une bouche d'accès par laquelle le support entre dans le volume interne. Une telle solution améliore le maintien mécanique du support sur la vertèbre. Elle améliore également l'aspect esthétique du balai d'essuyage porteur d'un tel dispositif de projection car la paroi périphérique couvre la découpe opérée à l'extrémité du support, ce qui permet de cacher d'éventuelles bavures.

De manière alternative, le dispositif de projection peut être dépourvu de volume interne. Dans une telle situation, le corps comprend une face qui sert de butée, c'est-à-dire contre laquelle le support du balai d'essuyage peut venir en appui.

De manière complémentaire, une excroissance est également prévue. Cette dernière prend naissance sur le corps, ladite excroissance étant destinée à pénétrer à l'intérieur d'un embout monté au bout, autrement dit à l'extrémité longitudinale du balai d'essuyage. Une telle excroissance augmente la tenue mécanique du dispositif de projection par rapport au balai d'essuyage.

On notera tout particulièrement que le corps est interposé entre le volume interne et l'excroissance puisque, pendant une phase d'assemblage, l'excroissance fait face à l'embout alors que le volume interne est ouvert vers le support.

Selon un exemple de réalisation, l'orifice de projection prend la forme d'un trou pratiqué dans une paroi issue de moulage avec le canal de circulation. On comprend ici que le canal est bouché à son extrémité porteuse de l'orifice de projection par le même matériau, issu d'un moulage commun avec celui permettant de réaliser le canal.

De manière alternative, l'orifice de projection est réalisé par une bille percée et rapportée à une extrémité ouverte du canal. Une telle bille est maintenue dans le canal mais présente un degré de liberté en rotation par rapport à ce canal.

Plus précisément, le dispositif de projection s'étend selon une première direction qualifiée de « longitudinale » en ce sens qu'elle s'étend parallèlement à la direction longitudinale du balai. De même, le canal s'étend selon une deuxième direction longitudinale, cette dernière étant parallèle à la première direction longitudinale. On garantit ainsi un arrosage d'une zone de la vitre la plus proche possible de la lame d'essuyage.

Avantageusement, le canal est relié au corps par au moins un bras qui prend naissance sur une face externe d'une paroi périphérique qui délimite avec le corps un volume interne.

L'invention couvre également la combinaison d'un embout monté à l'extrémité longitudinale d'un balai d'essuyage avec un dispositif de projection tel que détaillé ci-dessus, une telle combinaison étant nommée ci-après « ensemble ».

Dans cet ensemble, l'embout peut comprendre une paroi externe délimitant une espace interne qui reçoit une excroissance issue du dispositif de projection, c'est-à-dire solidaire du dispositif de projection. Le maintien mécanique du dispositif de projection sur le balai d'essuyage est ainsi amélioré.

Avantageusement, ladite paroi externe vient en appui contre une paroi périphérique du dispositif de projection adjacente à l'excroissance.

L'invention couvre encore un balai d'essuyage comprenant au moins un support, une vertèbre, une lame d'essuyage et un dispositif de projection selon l'une quelconque des caractéristiques exposées ci-dessus, ledit dispositif de projection étant installé à une extrémité longitudinale du balai.

De manière avantageuse, le support est décalé longitudinalement par rapport à la vertèbre afin de ménager une zone de réception du dispositif de projection.

Un tel décalage peut être réalisé en adaptant les dimensions du support. Ainsi, ce dernier présente une dimension selon un axe longitudinal du balai inférieure à une dimension de la vertèbre mesurée selon ce même axe, de sorte à ménager ladite zone, ladite zone recevant l'embout. Ce raccourcissement du support peut par exemple être réalisé en coupant un support d'un balai d'essuyage classique. Une telle disposition présente alors l'avantage de standardiser la fabrication des supports pour un balai d'essuyage sans dispositif de projection selon l'invention ou avec un tel dispositif.

Un tout premier avantage selon l'invention réside dans la manière d'intégrer le dispositif de projection à l'extrémité du balai d'essuyage. En effet, ce dispositif d'essuyage est enfilé sur la vertèbre et intercalé entre le support du balai d'essuyage et un embout rapporté à l'extrémité de ce balai. Il s'agit ici d'une solution technique simple à mettre en oeuvre, fiable et répondant aux contraintes économiques existantes dans le milieu automobile.

Un autre avantage réside dans la compacité du balai d'essuyage comprenant le dispositif de projection. En effet, il possible d'amener le liquide lave vitre au plus près de la lame d'essuyage ce qui permet d'optimiser son utilisation.

D'autres caractéristiques, détails et avantages de l'invention ressortiront plus clairement à la lecture de la description donnée ci-après à titre indicatif en relation avec des dessins dans lesquels :
- la figure 1 est une vue en perspective d'une extrémité d'un balai d'essuyage équipé d'un exemple de réalisation d'un dispositif de projection selon l'invention,
- la figure 2 est une vue en éclaté de la figure 1,
- la figure 3 est une vue en perspective du dispositif de projection selon l'invention.

Il faut noter que les figures exposent l'invention de manière détaillée pour mettre en oeuvre l'invention, lesdites figures pouvant bien entendu servir à mieux définir l'invention le cas échéant.

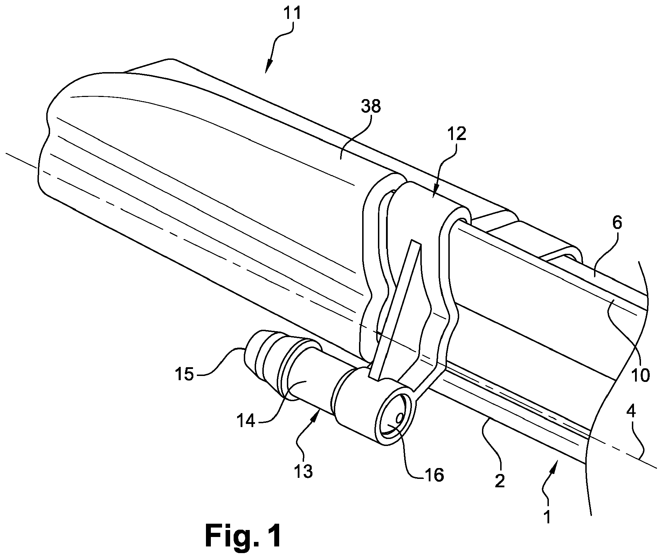

La figure 1 montre de manière partielle un balai d'essuyage équipant un système d'essuyage monté sur un véhicule automobile. Ce balai est installé sur le pare-brise avant du véhicule mais il peut également être monté sur la vitre arrière de ce dernier.

Le balai comprend une lame d'essuyage 1, autrement appelée lame racleuse, constituée d'une zone de frottement 2 sur le vitrage reliée à un talon par une portion amincie. Ce talon assure la liaison mécanique avec un support constitutif du balai. Cette lame d'essuyage 1 s'étend sur la longueur selon un axe longitudinal 4.

Le balai comprend par ailleurs une vertèbre qui forme un dispositif de rigidification du balai. A titre d'exemple, il s'agit d'une baguette métallique unique qui s'étend selon l'axe longitudinal 4, définissant ainsi sa longueur, et qui présente au repos une courbure convexe par rapport au pare-brise. Cette baguette présente une flexibilité déterminée, qui en se déformant quand le balai est appliqué sur le pare-brise, provoque un effort réparti sur tout le long de la lame d'essuyage 1.

La lame 1 et la vertèbre sont retenues par le support 6 qui forme alors une monture de support longitudinale couvrant et retenant la vertèbre et la lame d'essuyage 1. Ce support 6 assure ainsi un lien mécanique entre la lame 1 et la vertèbre. Il comprend par ailleurs un déflecteur d'air 10 dont la fonction est d'augmenter la force d'appui du balai d'essuyage sur le pare-brise au bénéfice de l'effet aérodynamique de l'air. Dans cet exemple de réalisation, le déflecteur d'air 10 et le support 6 forment un ensemble commun. Ils sont par exemple moulés à partir d'un même matériau flexible tel qu'un caoutchouc ou un élastomère.

A l'extrémité du balai est installé un embout 11. D'une manière générale, cet embout 11 assure une multiplicité de fonctions :
- il participe au maintien mécanique du dispositif de projection sur le balai d'essuyage,
- il autorise le montage et le démontage de la lame d'essuyage 1 par rapport au support 6, cette dernière pouvant être remplacée par translation de la lame vis-à-vis du support 6,
- il assure une finition esthétique de l'extrémité du balai d'essuyage.

L'embout 11 présente une section globalement complémentaire à la section du support 6 et du déflecteur 10. Cet embout comprend une paroi externe 38 qui suit le profil du support 6 et du déflecteur 10.

La figure 1 montre aussi un exemple de réalisation du dispositif de projection 12 d'un liquide lave vitre. Un tel dispositif apporte une quantité de liquide sur la surface vitrée de sorte à favoriser le nettoyage de cette dernière par l'action de raclage du balai d'essuyage.

Ce dispositif de projection 12 est monté à une extrémité du balai d'essuyage selon l'axe longitudinal 4.

Un tel dispositif de projection 12 comprend au moins un corps et un canal 13 de circulation du liquide réalisés de manière unitaire. On comprend ici que ce canal 13 et ce corps sont moulés simultanément à partir d'une matière plastique. Ils forment ainsi une ensemble inséparable sans destruction de l'un ou de l'autre des ces éléments.

Le canal 13 prend la forme d'un tube 14 creux et cylindrique qui comporte, à une première extrémité longitudinale un orifice d'admission 15 du liquide, et à une deuxième extrémité opposée à la première extrémité par rapport au tube 14, un orifice de projection 16.

Ce dispositif de projection 12 est prisonnier entre le support 6 et l'embout 11. Il est maintenu au moyen d'un logement ménagé dans son corps au travers duquel passe la vertèbre du balai d'essuyage.

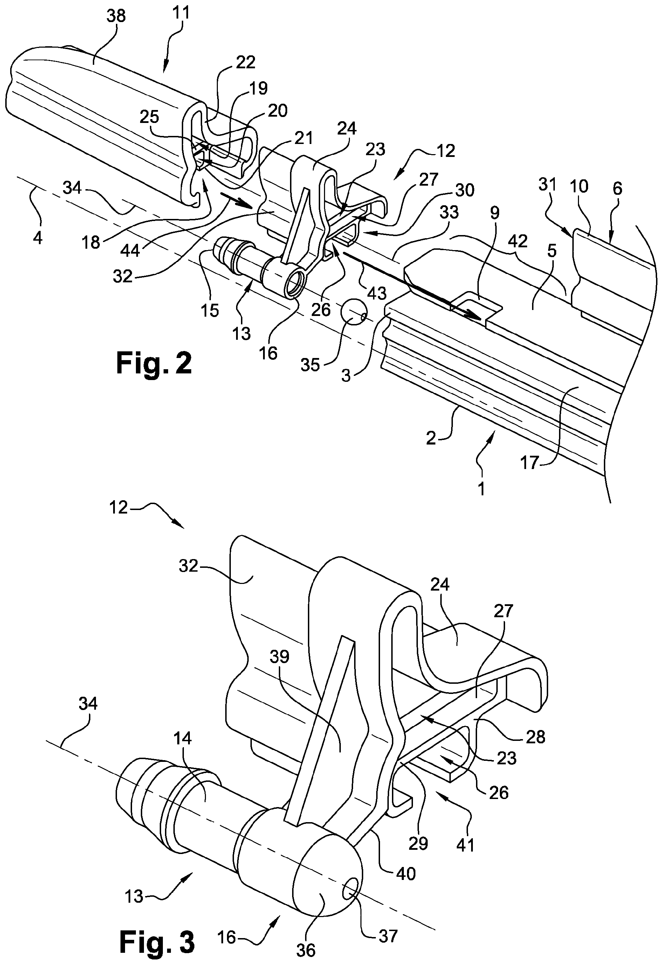

La figure 2 montre plus en détails la structure des éléments constitutifs du balai d'essuyage selon l'invention.

La lame d'essuyage 1 comporte sa zone de frottement 2 et son talon 3 délimité par une paroi supérieure 17. La vertèbre est ici référencée 5 et on constate que cette dernière comprend une découpe 9 réalisé sur un côté de la vertèbre. Une telle découpe participe à la solidarisation de l'embout 11 sur le balai d'essuyage.

L'embout 11 est délimité vis-à-vis de l'extérieur par la paroi externe 38. Autrement dit, la paroi externe délimite au moins partiellement un volume ou espace dans lequel s'étendent une première cavité 19 et une deuxième cavité 20.

La première cavité 19 est apte à recevoir la vertèbre 5 alors que la deuxième cavité 20 est apte à recevoir la lame d'essuyage 1, plus spécifiquement le talon 3 de la lame.

La première cavité 19 est formée dans le matériau plastique constitutif de l'embout 11. Cette première cavité 19 correspond à un enlèvement de matière de section complémentaire à la section de la vertèbre 5. Une telle première cavité 19 s'étend selon une direction parallèle à l'axe longitudinal 4. Cette première cavité 19 est ainsi délimitée d'un côté par une face supérieure constitutive de l'embout 11 et de l'autre par une paroi intermédiaire 25. Latéralement, cette première cavité 19 est bordée par deux flancs raccordés à une face interne de la paroi externe 38.

La deuxième cavité 20 reçoit le talon 3 de la lame d'essuyage 1. Cette deuxième cavité 20 s'étend longitudinalement dans l'embout 11 selon une direction parallèle à l'axe longitudinal 4. Une telle deuxième cavité 20 est à l'opposé de la première cavité 19 par rapport à la paroi intermédiaire 25. On comprend que celle-ci délimite à la fois la première cavité 19 et la deuxième cavité 20. L'embout 11 comprend encore une saignée alignée avec la deuxième cavité 20 et qui ouvre cette dernière vers le milieu environnant l'embout 11. Une telle saignée, de largeur inférieure à la largeur de la deuxième cavité 20 mesurée selon un axe transversal perpendiculaire à l'axe longitudinal 4, autorise le passage de la portion amincie située entre le talon 3 et la zone de frottement 2.

On notera que l'embout 11 comprend une face 21 dans laquelle débouchent la première cavité 19 et la deuxième cavité 20. Cette face 21 s'étend dans un plan perpendiculaire à l'axe longitudinal 4 et cette face 21 est ménagée en retrait d'un bord 22 qui termine la paroi externe 38. Autrement dit, la paroi externe 38 se prolonge au delà de la face 21 pour former un espace interne 18 dans lequel une partie du dispositif de projection 12 vient se loger.

Les figures 2 et 3 montrent en détails la structure du dispositif de projection 12. Ce dernier comprend le corps 23 et le canal de circulation de fluide 13. Ce corps 23 sert de support à une paroi périphérique 24, cette dernière présentant notamment un profil complémentaire du profil pris par le support 6 et le déflecteur 10.

Le corps 23 comprend un logement 27 de section complémentaire à la section de la vertèbre 5. A titre d'exemple, cette section est rectangulaire.

Le logement 27 forme ainsi un trou qui traverse de part en part le corps 23 afin d'autoriser un passage de la vertèbre 5 pour rejoindre l'embout 11, en particulier la première cavité 19 de cet embout 11. Un tel logement garantit la retenue mécanique du dispositif de projection 12 vis-à-vis de la vertèbre 5, et par voie de conséquence du balai d'essuyage.

Le corps 23 du dispositif de projection 12 comprend encore un évidement 26 destiné à recevoir le talon 3 de la lame d'essuyage 1. La section en coupe transversale perpendiculaire à l'axe longitudinal 4 de l'évidement 26 est ainsi complémentaire de la section du talon 3 coupé de manière identique. Cet évidement 26 traverse de part en part le corps 23 du dispositif de projection 12 de sorte à permettre une insertion du talon 3 dans l'embout 11.

Une paroi séparatrice 29 constitutive du corps 23 est ménagée entre le logement 27 et l'évidement 26. La paroi 29 s'étend selon l'axe longitudinal 4.

Le corps 23 est délimité par une face interne 28 au niveau de laquelle débouchent le logement 27 et l'évidement 26. La paroi périphérique 24 se prolonge dans la direction de l'axe longitudinal 4 au-delà de la face interne 28 et délimite ainsi, conjointement avec cette face interne 28, un volume interne 30. Ce volume interne 30 reçoit alors le support 6 et avantageusement le déflecteur d'air 10 du balai d'essuyage. Autrement dit, la paroi périphérique 24 chevauche le support 6, ce qui permet de cacher les éventuelles bavures disgracieuses qu'une coupe du support 6 entraîne. La face interne 28 et une tranche extrémale 31 du support 6 forment deux butées qui viennent en appui l'une contre l'autre quand le dispositif de projection 12 est enfilé sur la vertèbre 5.

A l'opposé de ce volume interne 30 par rapport au corps 23, le dispositif de projection 12 comprend une excroissance 32 qui prend naissance sur le corps 23 et s'étend selon une direction parallèle à l'axe longitudinal 4. On comprend ici que l'excroissance 32 est moulée simultanément avec le corps 23 du dispositif de projection 12.

Cette excroissance 32, autrement appelée prolongement, présente une section selon une coupe orthogonale à l'axe longitudinal 4 complémentaire de la section du volume de l'espace interne 18 de l'embout 11 évaluée dans une même coupe. Une telle excroissance 32 pénètre à l'intérieur de l'embout 11, en particulier à l'intérieur de l'espace interne 18 de l'embout 11.

On comprend ainsi que le corps 23 est interposé entre le volume interne 30 et l'excroissance 32, la paroi 24 recouvrant le corps 23 et le volume interne 30.

Le dispositif de projection 12 s'étend selon une première direction longitudinale 33 qui est parallèle à l'axe longitudinal 4 alors que le canal 13 de circulation de fluide s'étend selon une deuxième direction longitudinale 34. Dans un exemple de réalisation de l'invention, la deuxième direction longitudinale 34 est parallèle à la première direction longitudinale 33. Une telle disposition favorise l'efficacité du nettoyage de la vitre essuyée car cela permet au liquide lave vitre d'être projeté au plus prés de la lame d'essuyage. Un tel parallélisme assure que le liquide ne sera pas projeté soit sur la lame d'essuyage 1, soit à une distance trop éloignée de la lame d'essuyage 1.

La figure 2 montre également un aspect reconnaissable de l'invention. En effet, le support 6 est décalé par rapport à la vertèbre 5 selon l'axe longitudinal 4. Un tel décalage libère ainsi une zone 42 qui est destinée à recevoir au moins le dispositif de projection 12. De manière avantageuse, cette zone 42 reçoit également l'embout 11, le dispositif de projection 12 étant alors intercalé entre le support 6 et l'embout 11. La présence d'une telle zone 42 rend reconnaissable la combinaison du support 6 avec la vertèbre 5 et la lame d'essuyage 1 pour une utilisation avec le dispositif de projection 12. Autrement dit, cette combinaison est reconnaissable dès lors que le support 6 est plus court, selon l'axe longitudinal 4, comparée à la longueur de la vertèbre 5, et éventuellement la longueur de la lame d'essuyage 1.

Selon un exemple de réalisation du balai d'essuyage, le support 6 présente une dimension selon l'axe longitudinal 4, c'est-à-dire une longueur, du balai d'essuyage inférieure à une dimension de la vertèbre 5 mesurée selon ce même axe. Une telle disposition permet ainsi de former aisément la zone 42, par exemple en coupant le support 6 à une longueur inférieure à la vertèbre 5.

La figure 2 montre un exemple de réalisation de l'orifice de projection 16. Le tube 14 est alors ouvert pour recevoir une bille 35 percée d'un trou en son centre. Cette dernière est ainsi rapportée dans le tube 14 de manière mobile en rotation et fixe en translation pour pouvoir ajuster la projection du liquide au souhait de l'utilisateur du véhicule.

La figure 3 illustre un autre exemple de réalisation de l'orifice de projection 16. Le tube 14 est fermé à sa deuxième extrémité par une paroi 36, par exemple sphérique, issue de moulage simultanément à la formation du canal 13 de circulation de liquide. Cette paroi sphérique présente un trou 37 qui s'étend selon un axe central confondu avec la deuxième direction longitudinale 34, ce trou 37 assurant la pulvérisation du liquide sur la vitre à essuyer.

Le canal 13 de circulation de liquide, le corps 23, la paroi périphérique 24 et éventuellement l'excroissance 32 forme une pièce unitaire, c'est-à-dire réalisée simultanément et à partir d'un même matériau, par exemple un plastique.

Le canal 13 de circulation de liquide est ainsi relié mécaniquement au corps 23 via au moins un bras 39, autrement appelé jambe de force. Ce bras 39 prend naissance d'un côté sur une face externe de la paroi périphérique 24 et de l'autre sur le tube 14. De manière complémentaire, une telle liaison est complétée par un prolongement 40 de la paroi périphérique 24 en direction du tube 14. Dans une telle situation, le bras 29 s'étend dans un plan perpendiculaire au prolongement 40 de la paroi périphérique 24.

L'évidement 26 est ouvert sur l'extérieur du dispositif de projection 12 au moyen d'une gorge 41, cette dernière s'étendant selon un axe parallèle à la direction d'extension de l'évidement 26. Ainsi, de part et d'autre de la gorge 41, l'évidement forme deux crochets qui enferment le talon 3 de la lame d'essuyage. Le dispositif de projection de liquide 12 participe ainsi au maintien mécanique de la lame d'essuyage, au moins sur une partie de sa longueur. Il est également possible d'extraire et/ou d'insérer la lame d'essuyage 1 par une translation selon l'axe longitudinal 4 par rapport au support 6. L'embout 11 peut alors présenter des moyens de fixation amovibles sur le balai d'essuyage afin d'autoriser l'extraction ou l'insertion de la lame d'essuyage, et corrélativement la sécurisation de la position de la lame d'essuyage après son remplacement. Dans le cas où la lame d'essuyage est usée, il est alors possible de remplacer uniquement celle-ci et conserver les autres composants tels que le support 6, le déflecteur 10, la vertèbre 5, le dispositif de projection 12 ou l'embout 11, la durée de vie de ces composants étant supérieure à celle de la lame d'essuyage 1.

La figure 2 illustre par la flèche référencée 43 un procédé d'assemblage du dispositif de projection 12 sur un balai d'essuyage présentant une zone de réception 42 où,
- on insère le dispositif de projection 12 sur le balai d'essuyage en coulissant une vertèbre 5 constitutive du balai dans un logement 27 ménagé dans le dispositif de projection 12.

La flèche 44 illustre une étape supplémentaire au cours de laquelle l'embout 11 est enfilé à l'extrémité de la vertèbre 5, et d'une manière générale à l'extrémité du balai d'essuyage, par coopération entre la vertèbre 5 et une première cavité 19 ménagée dans l'embout 11.

Enfin, le procédé peut être complété par une étape préalable de réduction d'une longueur d'un support 6 par rapport à une longueur d'une vertèbre 5, le support 6 et la vertèbre 5 étant constitutif du balai d'essuyage.

Une telle réduction est par exemple opérée par une étape de coupe du support 6.

Un tel dispositif de projection peut également être mis en oeuvre dans le cadre d'un balai d'essuyage comprenant deux vertèbres positionnées chacune dans une rainure longitudinale de part et d'autre d'une lame d'essuyage intégrant un déflecteur. Le logement 27 permet alors de positionner le dispositif de projection en coulissement sur les vertèbres du balai d'essuyage et l'évidement 26 présente alors une forme épousant le profil de la lame du balai d'essuyage. Ces éléments ainsi que l'excroissance 32 assurent le maintien du dispositif de projection sur le balai d'essuyage.

## Revendications

1. Dispositif de projection (12) d'un liquide destiné à être monté à une extrémité longitudinale d'un balai d'essuyage comprenant au moins une vertèbre (5), une lame d'essuyage (1) et un support (6), la lame (1) et la vertèbre (5) étant retenues par le support (6) formant une monture de support longitudinale couvrant et retenant la vertèbre et la lame d'essuyage, ledit dispositif (12) comprenant un corps (23) et un canal (13) de circulation du liquide réalisés de manière unitaire, ledit canal (13) comprenant un orifice d'entrée (15) et un orifice de projection (16),
ledit corps comprenant :
- un logement (27) formant un trou traversant de part en part le corps (23) du dispositif de projection (12), ledit logement possédant une section complémentaire à la section de la vertèbre (5),
- un évidement (26) traversant de part en part le corps (23) du dispositif de projection (12) et étant destiné à recevoir le talon (3) de la lame d'essuyage (1), ledit évidement possédant une section complémentaire de la section du talon (3),
- une paroi séparatrice (29) ménagée entre le logement (27) et l'évidement (26),
**caractérisé en ce que** ledit dispositif de projection comprend un volume interne (30) délimité par le corps (23) et par une paroi périphérique (24), ledit volume interne (30) étant apte à recevoir le support (6) formant une monture de support longitudinale constitutif du balai d'essuyage.

2. Dispositif selon la revendication précédente dans lequel est prévue une excroissance (32) qui prend naissance sur le corps (23), ladite excroissance (32) étant destinée à pénétrer à l'intérieur d'un embout (11) monté à l'extrémité longitudinale du balai d'essuyage.

3. Dispositif selon la revendication 2, dans lequel ledit corps (23) étant interposé entre le volume interne (30) et l'excroissance (32).

4. Dispositif selon l'une quelconque des revendications précédentes, dans lequel l'orifice de projection (16) prend la forme d'un trou (37) pratiqué dans une paroi (36) issue de moulage avec le canal (13) de circulation de liquide.

5. Dispositif selon l'une quelconque des revendications 1 à 3, dans lequel l'orifice de projection (16) est réalisé par une bille (35) percée et rapportée à une extrémité ouverte du canal (13) de circulation de liquide.

6. Dispositif selon l'une quelconque des revendications précédentes, qui s'étend selon une première direction longitudinale (33), le canal (13) de circulation de liquide s'étendant selon une deuxième direction longitudinale (34), dans lequel la deuxième direction longitudinale (34) est parallèle à la première direction longitudinale (33).

7. Dispositif selon l'une quelconque des revendications précédentes, dans lequel le canal (13) de circulation de liquide est relié au corps (23) par au moins un bras (39) qui prend naissance sur une face externe d'une paroi périphérique (24) qui délimite avec le corps (23) un volume interne (30).

8. Ensemble comprenant un embout (11) apte à être installé à une extrémité longitudinale d'un balai d'essuyage et un dispositif de projection (12) d'un liquide pour un balai d'essuyage selon l'une quelconque des revendications précédentes.

9. Ensemble selon la revendication 8, dans lequel l'embout (11) comprend une paroi externe (38) délimitant une espace interne (18) qui reçoit une excroissance (32) issue du dispositif de projection (12).

10. Balai d'essuyage comprenant au moins un support (6), une vertèbre (5), une lame d'essuyage (1) et un dispositif de projection (12) selon l'une quelconque des revendications 1 à 7 installé à une extrémité longitudinale du balai d'essuyage.

11. Balai d'essuyage selon la revendication 10, dans lequel le support (6) est décalé longitudinalement par rapport à la vertèbre (5) afin de ménager une zone (42) de réception du dispositif de projection (12).

12. Balai d'essuyage selon la revendication 11, dans lequel le support (6) présente une dimension selon un axe longitudinal (4) du balai d'essuyage inférieure à une dimension de la vertèbre (5) mesurée selon ce même axe, de sorte à ménager ladite zone (42).

13. Balai d'essuyage selon l'une quelconque des revendications 11 ou 12, dans lequel la zone (42) reçoit un embout (11).

## Patentansprüche

1. Flüssigsprühvorrichtung (12), welche dazu bestimmt ist, an einem Längsende eines Wischblatts montiert zu werden, umfassend mindestens eine Versteifung (5), eine Wischleiste (1) und einen Träger (6), wobei die Leiste (1) und die Versteifung (5) von dem Träger (6) gehalten werden, der eine Längsträgerhalterung bildet, welche die Versteifung und die Wischleiste bedeckt und hält, wobei die Vorrichtung (12) einen Körper (23) und einen Kanal (13) für die Zirkulation von Flüssigkeit umfasst, die einteilig ausgeführt sind, wobei der Kanal (13) eine Eintrittsöffnung (15) und eine Sprühöffnung (16) umfasst,
wobei der Körper umfasst:
- eine Aufnahme (27), die ein durchgehendes Querloch des Körpers (23) der Sprühvorrichtung (12) bildet, wobei die Aufnahme einen Querschnitt aufweist, der komplementär zum Querschnitt der Versteifung (5) ist,
- eine Aussparung (26), die durchgehend den Körper (23) der Sprühvorrichtung (12) quert und dazu bestimmt ist, den Ansatz (3) der Wischleiste (1) aufzunehmen, wobei die Aussparung einen Querschnitt aufweist, der komplementär zum Querschnitt des Ansatzes (3) ist,
- eine Trennwand (29), die zwischen der Aufnahme (27) und der Aussparung (26) angeordnet ist,
**dadurch gekennzeichnet, dass** die Sprühvorrichtung ein inneres Volumen (30) umfasst, das von dem Körper (23) und von einer Umfangswand (24) begrenzt wird, wobei das innere Volumen (30) geeignet ist, den Träger (6) aufzunehmen, der eine Längsträgerhalterung bildet, die das Wischblatt bildet.

2. Vorrichtung nach dem vorhergehenden Anspruch,
wobei ein Vorsprung (32) bereitgestellt ist, der vom Körper (23) ausgeht, wobei der Vorsprung (32) dazu bestimmt ist, in das Innere eines Aufsatzes (11) einzudringen, der am Längsende des Wischblatts montiert ist.

3. Vorrichtung nach Anspruch 2,
wobei der Körper (23) zwischen dem inneren Volumen (30) und dem Vorsprung (32) angeordnet ist.

4. Vorrichtung nach einem der vorhergehenden Ansprüche,
wobei die Sprühöffnung (16) die Form eines Lochs (37) annimmt, das in einer Wand (36) ausgebildet ist, die durch Formen mit dem Kanal (13) für die Zirkulation von Flüssigkeit gebildet wird.

5. Vorrichtung nach einem der Ansprüche 1 bis 3, wobei die Sprühöffnung (16) durch eine Kugel (35) gebildet wird, die zu einem offenen Ende des Kanals (13) für die Zirkulation von Flüssigkeit gestoßen und bewegt wird.

6. Vorrichtung nach einem der vorhergehenden Ansprüche,
welche sich in einer ersten Längsrichtung (33) erstreckt, wobei sich der Kanal (13) für die Zirkulation von Flüssigkeit in einer zweiten Längsrichtung (34) erstreckt, wobei die zweite Längsrichtung (34) zur ersten Längsrichtung (33) parallel ist.

7. Vorrichtung nach einem der vorhergehenden Ansprüche,
wobei der Kanal (13) für die Zirkulation von Flüssigkeit mit dem Körper (23) durch mindestens einen Arm (39) verbunden ist, der von einer Außenfläche einer Umfangswand (24) ausgeht, die mit dem Körper (23) ein inneres Volumen (30) begrenzt.

8. Einheit, umfassend einen Aufsatz (11), der geeignet ist, an einem Längsende eines Wischblatts installiert zu werden, und eine Flüssigsprühvorrichtung (12) für ein Wischblatt nach einem der vorhergehenden Ansprüche.

9. Einheit nach Anspruch 8,
wobei der Aufsatz (11) eine Außenwand (38) umfasst, die einen Innenraum (18) begrenzt, welcher einen Vorsprung (32) aufnimmt, der von der Sprühvorrichtung (12) ausgeht.

10. Wischblatt, umfassend mindestens einen Träger (6), eine Versteifung (5), eine Wischleiste (1) und eine Sprühvorrichtung (12) nach einem der Ansprüche 1 bis 7, die an einem Längsende des Wischblatts installiert ist.

11. Wischblatt nach Anspruch 10,
wobei der Träger (6) in Längsrichtung in Bezug auf die Versteifung (5) versetzt ist, um eine Zone (42) zum Aufnehmen der Sprühvorrichtung (12) einzurichten.

12. Wischblatt nach Anspruch 11,
wobei der Träger (6) eine Abmessung in einer Längsachse (4) des Wischblatts aufweist, die kleiner ist als eine Abmessung der Versteifung (5), gemessen in derselben Achse, um die Zone (42) einzurichten.

13. Wischblatt nach einem der Ansprüche 11 oder 12,
wobei die Zone (42) einen Aufsatz (11) aufnimmt.

## Claims

1. A device (12) for spraying a liquid, intended to be mounted at a longitudinal end of a wiper comprising at least one vertebra (5), a wiper blade (1) and a support (6), the blade (1) and the vertebra (5) being held by the support (6) which forms a longitudinal supporting frame covering and retaining the vertebra and the wiper blade, said device (12) comprising a body (23) and a circulation channel (13) for the liquid that are produced in one piece, said channel (13) comprising an inlet orifice (15) and a spraying orifice (16),
said body comprising :
- a housing (27) forming a hole which passes from one side to the other of the body (23) of the spraying device (12), said housing having a section complementary to the section of the vertebra (5),
- a recess (26) passing from one side to the other of the body (23) of the spraying device (12) and intended to receive the heel (3) of the wiper blade (1), said recess having a section complementary to the section of the heel (3),
- a separating wall (29) formed between the housing (27) and the recess (26),
**characterized in that** said spraying device comprises an internal volume (30) delimited by the body (23) and by a peripheral wall (24), said internal volume (30) being able to receive the support (6) which forms a longitudinal supporting frame of the wiper.

2. The device as claimed in the preceding claim,wherein a protuberance (32) which originates on the body (23) is provided, said protuberance (32) being intended to pass into the interior of an end fitting (11) mounted at the longitudinal end of the wiper.

3. The device as claimed in claim 2, in which said body (23) being interposed between the internal volume (30) and the protuberance (32).

4. The device as claimed in any one of the preceding claims, wherein the spraying orifice (16) is in the form of a hole (37) made in a wall (36) molded together with the liquid circulation channel (13).

5. The device as claimed in any one of claims 1 to 3, wherein the spraying orifice (16) is realized by a pierced ball (35) connected to an open end of the liquid circulation channel (13).

6. The device as claimed in any one of the preceding claims, which extends in a first longitudinal direction (33), the liquid circulation channel (13) extending in a second longitudinal direction (34), wherein the second longitudinal direction (34) is parallel to the first longitudinal direction (33).

7. The device as claimed in any one of the preceding claims, wherein the liquid circulation channel (13) is connected to the body (23) by at least one arm (39) which originates on an outer face of a peripheral wall (24) which, together with the body (23), delimits an internal volume (30).

8. An assembly comprising an end fitting (11) that is able to be installed at a longitudinal end of a wiper, and a device (12) for spraying a liquid for a wiper as claimed in any one of the preceding claims.

9. The assembly as claimed in claim 8, wherein the end fitting (11) comprises an outer wall (38) delimiting an inner space (18) which receives a protuberance (32) protruding from the spraying device (12).

10. A wiper comprising at least one support (6), a vertebra (5), a wiper blade (1) and a spraying device (12) as claimed in any one of claims 1 to 7 installed at a longitudinal end of the wiper.

11. The wiper as claimed in claim 10, wherein the support (6) is offset longitudinally with respect to the vertebra (5) in order to form a zone (42) for receiving the spraying device (12).

12. The wiper as claimed in claim 11, wherein the support (6) has a dimension along a longitudinal axis (4) of the wiper which is less than a dimension of the vertebra (5) measured along this same axis, so as to form said zone (42).

13. The wiper as claimed in either of claims 11 and 12, wherein the zone (42) receives an end fitting (11).
